# EUROPÄISCHE PATENTSCHRIFT

(11) **EP 1 055 554 B1**
(45) Veröffentlichungstag und Bekanntmachung des Hinweises auf die Patenterteilung: **21.06.2006**
(21) Anmeldenummer: 00110687.1
(22) Anmeldetag: 19.05.2000
(51) Int. Cl.: B60N 2/60

(54) **Sitzbezug zum Schutz eines Kraftfahrzeug-Sitzes**
Seat cover for protecting a motor vehicle seat
Housse de siège pour protéger un siège de véhicule automobile

(30) Priorität: 25.05.1999 DE 19923889
(43) Veröffentlichungstag der Anmeldung: 29.11.2000
(73) Patentinhaber: Horn & Bauer GmbH & Co. KG, 34613 Schwalmstadt (DE)
(72) Erfinder:
(74) Vertreter: Rehberg Hüppe + Partner

(56) Entgegenhaltungen:
- DE-A- 1 920 529
- DE-B- 1 630 878
- DE-C- 4 132 714
- DE-C- 4 333 051
- DE-C- 19 536 062
- DE-U- 29 815 057
- US-A- 3 695 692
- US-A- 4 669 779

## Beschreibung

Die Erfindung bezieht sich insbesondere auf einen Sitzbezug zum Schutz eines Kraftfahrzeug-Sitzes aus doppellagiger Kunststofffolie, insbesondere für die Erstausstattung, mit einer durchgehenden, die Sitzfläche und die Rücklehnenfläche des Sitzes schützenden Vorderlage und einer mit der Vorderlage durch Querschweißung verbundenen Rücklage, die in Verbindung mit der Vorderlage eine erste, die Rückenlehne des Sitzes im wesentlichen aufnehmende Tasche und eine das Sitzpolster im wesentlichen umschließende zweite Tasche bildet, wobei die die beiden Taschen bildenden Bereiche der Rücklage durch Verbindungsstreifen verbunden sind, die sich über die freien Ränder der die Taschen bildenden Bereiche entlang der Querschweißungen erstrecken und mit der Vorderlage verbunden sind, so dass die somit im wesentlichen durchgehende Rücklage eine randgeschlossene Ausnehmung aufweist. Die Erfindung zeigt weiterhin ein Verfahren zur Herstellung solcher Sitzbezüge aus Kunststofffolie. Die Erfindung kann sich aber auch allgemein auf einen Schutzbezug für Gegenstände beziehen, z.B. auf einen Lenkradschutz mit kreisförmiger Vorderlage, die faltenfrei mit einer Rücklage verbunden ist, auf einen Reifenschutz, z. B. des Reseverreifens oder eines Winterrades. Der Schutzbezug kann auch zum Schutz von Kissen, Sesseln oder anderen Möbelstücken oder für Teile von Möbelstücken eingesetzt werden. Auch für den Schutz von Einkaufswagen in Supermärkten besteht eine Anwendungsmöglichkeit. Eine weitere Anwendung bezieht sich auf den Hygiene-/Krankenhausbereich. Hier kann der Schutzbezug um eine Matratze oder ein Matratzenteil aufgezogen werden. In all diesen Fällen kann die Vorderlage als Werbeträger genutzt werden.

Sitzbezüge aus Kunststofffolie werden über Kraftfahrzeug-Sitze gestülpt bzw. gezogen, um eine Verschmutzung des Kraftfahrzeug-Sitzes durch Monteure und andere Personen zu verhindern. Bekannt sind solche Sitzbezüge in ihrer Anwendung in Automobilwerkstätten, wenn an Kraftfahrzeugen eine Inspektion oder Reparatur durchgeführt wird. Aber auch bei der Erstausstattung eines Kraftfahrzeugs, also im Automobilwerk bei der Montage des Kraftfahrzeugs, sind die Kraftfahrzeug-Sitze bereits einer Verschmutzungsgefahr ausgesetzt. Diese Verschmutzungsgefahr beginnt sogar bereits beim Hersteller der Kraftfahrzeugsitze und bei der Zulieferung der Sitze zum Automobilwerk. Sie setzt sich fort bei der Bestückung von Förderanlagen mit den Sitzen, die letztlich zum Montageband des Kraftfahrzeugs führen. Auch während der Montage des Kraftfahrzeugs kommt eine Vielzahl von Monteuren nacheinander mit den Kraftfahrzeug-Sitzen in Berührung. Schließlich muss das fertig montierte Kraftfahrzeug vom Band gefahren, auf Lastkraftwagen oder Eisenbahnwaggons aufgefahren und letztlich beim Kraftfahrzeughändler noch mehrmals gehandhabt werden, bis das Kraftfahrzeug letztlich in die Hand des Erwerbers bzw. Käufers ausgeliefert werden kann. Von der Herstellung des Sitzes beim Zulieferer bis zur Auslieferung des Kraftfahrzeugs an den Erwerber oder Kunden kommen die Kraftfahrzeug-Sitze etwa 30 bis 35 Mal in Kontakt mit Monteuren und anderen Personen, so dass hier eine erhebliche Verschmutzungsgefahr besteht. Um dieser Verschmutzungsgefahr entgegenzuwirken, sind bereits Sitzbezüge aus Kunststofffolie bekannt, die oft bereits beim Sitzhersteller, spätestens aber beim Kraftfahrzeughersteller, über die Kraftfahrzeug-Sitze, insbesondere den Fahrersitz, gestülpt werden und erst vor Auslieferung des Fahrzeugs an den Kunden entfernt werden. Solche Sitzbezüge für Erstausrüstung unterscheiden sich üblicherweise nicht sonderlich von den Sitzbezügen, die während der Inspektion oder Reparatur eines Kraftfahrzeugs benutzt werden. Sie können aus vergleichsweise dickerer Kunststofffolie hergestellt werden, die der insoweit größeren Beanspruchung gerecht wird.

Ein Schutzbezug der eingangs beschriebenen Art aus doppellagiger Kunststofffolie ist aus der DE 41 32 714 C1 bekannt. Dabei sind die die beiden Taschen bildenden Bereiche der Rücklage durch Verbindungsstreifen verbunden, die sich über die freien Ränder der die Taschen bildenden Bereiche entlang der Querschweißungen erstrecken. Die Verbindungsstreifen sind auch mit der Vorderlage verbunden, so dass die somit im Wesentlichen durchgehende Rücklage eine randgeschlossene Ausnehmung aufweist. Die beiden Lagen des Sitzbezugs, also die Vorderlage und die Rücklage, weisen damit gleichgroßen Umriss auf und sind miteinander an allen vier Kanten verbunden, also sowohl im Bereich der Querschweißungen durchgehend als auch im Bereich der Längsränder. Während die Vorderlage durchgehend geschlossen ausgebildet ist, ist in der Rücklage die randgeschlossene Ausnehmung vorgesehen, die allseits und mit Abstand zum Umriss des flachliegenden Sitzbezugs angeordnet ist und die einzige Öffnung darstellt, mit deren Hilfe der Sitzbezug über die Rückenlehne und das Sitzpolster aufgestülpt werden kann. Durch die Verbindungsstreifen werden neben den beiden bisher bekannten Taschen gleichsam zusätzliche, die Taschen verbindende Quertaschen geschaffen, die das Sitzpolster und die Rückenlehne im Übergangsbereich hintergreifen und damit einen wirksamen Schutz dieser gefährdeten Stellen des Kraftfahrzeug-Sitzes gegen Verschmutzung darstellen. Die Verrutschungsgefahr bei Benutzung des Kraftfahrzeug-Sitzes, der mit einem Sitzbezug geschützt ist, ist praktisch beseitigt. Trotzdem wird bei der Herstellung dieses Sitzbezugs jegliche Handarbeit vermieden. Auch entfällt die zusätzliche Verwendung von Gummibändern, Folienstreifen u. dgl. und es erübrigt ein zusätzlicher Montageaufwand. Beim Überstülpen des Sitzbezugs gelangt dieser vielmehr automatisch in seine das Sitzpolster sowie die Rückenlehne umhüllende Schutzstellung. Durch die Querschweißung wird die Vorderlage mit der Rücklage an jedem Sitz miteinander durchgehend verbunden. Andererseits kann die Querschweißung jedoch so erfolgen, dass die einzelnen Sitzbezüge dabei zugleich voneinander abgetrennt werden, so dass sie in einem Stapel übereinandergeschichtet abgelegt und auch in dieser Weise einem Versand zum Sitzhersteller oder Automobilhersteller gelangen können. Daneben ist es aber auch möglich, die einzelnen Sitzbezüge über Perforationen aneinanderhängen zu lassen und eine solche Endlosbahn auf einer Vorratsrolle aufzuwickeln. Die zur Herstellung der Sitzbezüge eingesetzte Kunststofffolie weist aus Materialersparnisgründen nur eine geringe Dicke auf, so dass bei Überstülpen die Gefahr des Einreißens besteht. In einem solchen Fall ist der ordnungsgemäße Sitz des Sitzbezugs auf dem Kraftfahrzeug-Sitz nicht mehr gewährleistet.

Wenn Kraftfahrzeug-Sitze, mit der Rückenlehne nach unten an einem Förderband hängend, dem Montageband des Kraftfahrzeugs zugeführt werden, besteht weiterhin die Gefahr, dass sich die Sitzbezüge ungewollt von dem Kraftfahrzeug-Sitz lösen und herabfallen. Damit erfüllen sie dann ihre Schutzfunktion auch nicht mehr. Um dieser Gefahr entgegenzuwirken, ist es bekannt, als gesondertes Teil zu dem Sitzbezug ein Gummiband zu verwenden, welches als geschlossene Schleife nach dem Überstülpen des Sitzbezugs so über die Rückenlehne geführt wird, dass es im Übergangsbereich zwischen Sitzpolster und Rückenlehne anliegt. Durch diese Maßnahme wird das unbeabsichtigte Herabfallen eines Sitzbezugs von einem hängend geförderten Kraftfahrzeug-Sitz vermieden. Gleichzeitig wird die Vorderlage des Sitzbezugs im Übergangsbereich zwischen Sitzpolster und Rückenlehne durch das Gummiband fixiert, so dass einer Verrutschungsgefahr entgegengewirkt wird. Die Verwendung solcher Gummibänder zusätzlich zu Sitzbezügen ist jedoch aufwendiger und erbringt nur bedingt Abhilfe gegen die Verschmutzungsgefahr.

Statt der zusätzlichen Verwendung eines Gummibands ist es auch bereits bekannt, etwa im Mittelbereich des freien Rands der Tasche, die die Rückenlehne umschließt, zwei Folienstreifen anzuschweißen. Diese beiden Folienstreifen werden nach Art von Bändern an einer Kittelschürze nach dem Überstülpen des Schonbezugs über den Sitz nach vorn geschlungen und dort miteinander verknotet, so dass auch hier ein engeres Anliegen der Vorderlage des Sitzbezugs im Übergangsbereich zwischen Sitzpolster und Rückenlehne erreicht wird. Die Herstellung dieser zusätzlichen Folienstreifen und insbesondere das Anschweißen ist aufwendig, erfordert nach dem Überstülpen des Sitzbezugs einen zusätzlichen Verknotungsvorgang und bringt darüber hinaus gegen die Verschmutzungsgefahr auch nur bedingt Abhilfe. Im Vergleich zu einem Gummiband sitzen die Folienstreifen vergleichsweise zu hoch an der Rückenlehne.

Die DE-U-298 15 057 zeigt und beschreibt einen Wechselbezug für Sitz- oder Liegepolster, der eine Vorderlage aus unelastischem Textilstoff zur sichtseitigen Überdeckung eines Polsters aufweist. Der Wechselbezug besitzt eine Rücklage in Form eines umlaufend mit dem Umfangsrand des Bezugsteils verbundenen elastisch dehnbaren Spannstreifens und ein am freien Innenrand des Spannstreifens umlaufendes gummielastisches Spannband. Die Rücklage kann sogar aus drei Elementen bestehen, nämlich noch zusätzlich ein die Bezugsöffnung übergreifendes Zugband zum lösbaren Verbinden einander gegenüberliegende Abschnitte des Spannstreifens aufweisen.

Ein weiterer bekannter Sitzbezug wird zunächst so hergestellt, wie es in der DE-B-16 30 878 beschrieben ist. Nach dem Zerteilen der Kunststoffbahn in die einzelnen Sitzbezüge erfolgt ein Anschweißen eines Halbschlauchs entlang der freien Ränder der von der Rücklage gebildeten Taschen sowie entlang der freien Ränder der Vorderlage in dem von den Taschen nicht abgedeckten Bereich. Beim Anschweißen des Halbschlauchs wird ein Gummiband in Form einer Schleife eingelegt. Mit diesem Gummiband wird an dem Sitzbezug dann gleichsam eine Öffnung geschaffen, die zum Aufstülpen auf den Kraftfahrzeug-Sitz genutzt wird, wobei das Gummiband dann eine gewisse Straffungswirkung ausübt, so dass insbesondere die Vorderlage des Sitzbezugs näher an dem Sitzpolster und an der Rückenlehne gehalten ist. Ein solcher Sitzbezug ist durch das Anschweißen des Halbschlauchs mit dem Gummiband, welches in Handarbeit durchgeführt wird, besonders aufwendig und teuer, erbringt aber andererseits eine gute Schutzwirkung. Das Überstülpen eines solchen Sitzbezugs über einen Kraftfahrzeug-Sitz ist jedoch vergleichsweise schwieriger durchführbar als bei dem eingangs beschriebenen Sitzbezug.

Es ist weiterhin bekannt, bereits beim Hersteller des Kraftfahrzeug-Sitzes das Sitzpolster einerseits und die Rückenlehne andererseits in je ein Schrumpffolienstück einzuschrumpfen und erst anschließend bei der Montage des Sitzes das Sitzpolster und die Rückenlehne zusammenzubringen. Diese beiden Teile aus Schrumpffolie verbleiben dann an dem Kraftfahrzeug-Sitz und schützen diesen auf seinem gesamten Weg über den Automobilhersteller bis zur Auslieferung des Kraftfahrzeugs an den Käufer oder Kunden. Das Aufschrumpfen bedeutet hier jedoch einen erheblichen zusätzlichen Aufwand, auch an entsprechenden Schrumpfvorrichtungen.

Es ist weiterhin bekannt, insbesondere aus Billiglohnländern, ein Gummiband auf den Rand einer randgeschlossenen Ausnehmung eines Sitzbezuges aus Kunststofffolie aufzunähen. Das Aufnähen geschieht in Handarbeit und unter Fixierung des Gummibandes unter Vorspannung. Dies hat zur Folge, dass das Gummiband als elastischer Fremdkörper die unelastische Folie unter Faltenbildung zusammenzieht. Dies stört nicht nur optisch, sondern verhindert auch bereits das Aufwickeln auf eine Rolle. Selbst als Einzelstücke im Stapel lassen sich solche Sitzbezüge nur schwer handhaben. Weitere Nachteile, wie ein faltiger Sitz auf dem Kraftfahrzeug-Sitz, eine Störanfälligkeit für elektronische Schranken o. dgl., eine Ein- und Weiterreißgefahr der Folie sind die Folge.

Aus der DE-A-19 20 529 ist ein Überzug, insbesondere ein Schonbezug für Kraftfahrzeugsitze oder andere Sitzmöbel bekannt, der aus einem allseitig elastisch dehnbaren Untergarngewebe mit hoher Rückdehnung und mit in gedehntem Zustand des elastischen Gamgewebes eingestrickter hochfloriger Wolle oder einem ähnlichen Material besteht. Ein solcher Überzug ist praktisch für alle Polster von Fahrzeugsitzen und ähnlichen Sitzmöbeln geeignet. Er umschließt die Sitzmöbel ganz und erfüllt so seine Schutzfunktion. Infolge der großen Dehnbarkeit ist ein solcher Überzug einfach in der Handhabung und kann leicht auf den Sitz aufgebracht werden. Es wird gleichsam ein Universalüberzug geschaffen, der sich auch Kraftfahrzeugsitzen unterschiedlicher Gestalt anpasst. Der Überzug kann aus mehreren Teilen oder Lagen bestehen, wobei in einer der Lagen eine Öffnung vorgesehen ist, um den Überzug sowohl über die Rückenlehne als auch über das Sitzpolster ziehen zu können.

Der Erfindung liegt die Aufgabe zugrunde, einen insbesondere für Erstausrüstung geeigneten Schutzbezug aus Kunststofffolie zu schaffen, der maschinell herstellbar ist, ein leichtes Überziehen über den Gegenstand, insbesondere den Kraftfahrzeug-Sitz, ermöglicht und trotzdem einen verbesserten strammeren Sitz auf dem Gegenstand erbringt, wobei alle wesentlichen Elemente des Gegenstandes, z.B. Kraftfahrzeug-Sitzes, schützend umschlossen werden. Der Schutzbezug soll ein mehrfaches Abnehmen und Wiederanlegen der für das Sitzpolster bestimmten Tasche ermöglichen.

Erfindungsgemäß wird dies dadurch erreicht, dass zumindest die Rücklage ganz oder teilweise aus elastischer, rückstellfähiger Kunststofffolie mit einer elastischen Dehnung von mindestens 50 % besteht.

Die Erfindung geht von dem Gedanken aus, die Materialeigenschaften der für die Herstellung des Schutzbezuges eingesetzen Kunststofffolie so zu verändern, dass der Schutzbezug zumindest teilweise von dem Gegenstand, insbesondere Sitzpolster des Kraftfahrzeug-Sitzes, abgenommen und wiederangelegt werden kann. Dies soll zumindest einige Male möglich sein, ohne dass die Kunststofffolie einreißt oder der stramme Sitz nach dem Wiederanlegen wesentlich nachlässt oder verloren geht. Es geht also um die Verwendung einer elastischen Folie für zumindest bestimmte Bereiche des Schutzbezugs. Die Elastizität und das damit verbundene Rückstellvermögen werden genutzt, um das Abnehmen und Wiederanlegen zu ermöglichen. Dies kann z.B. bereits bei der Montage des Kraftfahrzeug-Sitzes im Fahrzeug sinnvoll sein, weil in abgenommenem Zustand Befestigungsschrauben des Sitzes besser ereichbar sind. Auch beim Einbau einer Schublade, eines Feuerlöschers, eines Erste-Hilfe-Kastens o. dgl. kann es nützlich oder gar erforderlich sein, die das Schutzpolster umschließende Tasche des Sitzbezuges temporär zu lösen, ohne dass die die Rückenlehne umschließende Tasche des Schutzbezuges gelöst wird. Ähnliches gilt für den Anschluss oder die Einstellung von die Stellung des Sitzes verändernden Sitzmotoren, Belüftungseinrichtungen und dgl.. Dabei kann es vorkommen, dass der Schutzbezug bis zu etwa 10 mal und mehr abgenommen und wiederangelegt werden muss. Auch danach muss der Schutzbezug seine Schutzfunktion ordnungsgemäß erfüllen. Der Schutzbezug kann vorteilhaft in seinen Dimensionen etwas kleiner hergestellt werden als bisher. Die Elastizität einer stretchfähigen Folie erbringt trotzdem eine leichte Handhabung beim Überstülpen und einen verbesserten Sitz. Der Schutzbezug bekommt gleichsam gummielestische Eigenschaften und das Rückstellvermögen wird vorteilhaft genutzt. Der Schutzbezug legt sich in übergestülptem Zustand exakt an die Konturen des Kraftfahrzeug-Sitzes an. Damit entfällt eine Störmöglichkeit, wenn z. B. die richtige Position des Kraftfahrzeug-Sitzes im Fahrzeug mit elektronischen Schranken vermessen und überprüft wird. Überhängende Folienbereiche oder Falten des Sitzbezuges auf dem Kraftfahrzeug-Sitz können nicht mehr zu einer Störung führen. Der neue Sitzbezug besitzt auch Vorteile beim Überstülpen bzw. Aufziehen auf einen Kraftfahrzeug-Sitz. Er kann schnell und sicher sowie faltenfrei mit die Konturen des Kraftfahrzeug- Sitzes eng umschließem Sitz aufgezogen werden.

Die elastische Folie wird vorzugsweise im Bereich der Rücklage des Sitzbezugs und auch dort nur teilweise bzw. bereichsweise eingesetzt. Zumindest die Verbindungsstreifen bestehen aus dem elastischer, rückstellfähiger Kunststofffolie. Dies reicht bereits aus, um die gewünschte Wirkung im Bereich der das Sitzpolster umschließenden Tasche zu erzielen. Es ist aber auch möglich, größere Bereiche der Rücklage oder die gesamte Rücklage aus der elastischen Kunststofffolie zu bilden.

Die elastische, rückstellfähige Kunststofffolie sollte eine solche Elastizität und ein solches Rückstellvermögen aufweisen, dass der Sitzbezug von dem Kraftfahrzeug-Sitz mehrmalig auf- und abgezogen werden kann. Dies entspricht den Einsatzbedingungen bei der Montage eines Kraftfahrzeug-Sitzes am Montageband des Kraftfahrzeuges. Dabei muss die Folie eine solche Handhabung aushalten ohne ein- oder weiterzureißen. Die die Rücklage bildende Kunststofffolie soll eine elastische Dehnung von mindestens 50 % aufweisen. Vorzugsweise sollte sie mindestens 60 % elastische Dehnung aufweisen. Ob ein Folienmaterial diese Bedingungen erfüllt, kann mit einem einfachen Versuch beispielsweise wie folgt festgestellt werden: Ausgehend von einem Prüfstreifen von z. B. 50 mm Länge in ungedehntem Zustand erfolgt eine kurzzeitig einwirkende Dehnung dieses Prüfstreifens auf 150 mm (200 %) mit nachfolgender Entspannung (Relaxation). Der Prüfstreifen nimmt sehr schnell eine bleibende Länge von 75 mm an, hat sich also plastisch von 50 mm auf 75 mm gedehnt (50 %). Die Gesamtdehnung von 200 % setzt sich aus 50 % plastischer Dehnung und 150 % elastischer Dehnung zusammen. Die untersuchte Kunststofffolie weist somit eine elastische Dehnung von 150 % auf.

Die randgeschlossene Ausnehmung weist vorteilhaft eine ovale Gestalt oder eine Rechteckgestalt mit abgerundeten Ecken auf. Dies ist in mehrfacher Hinsicht vorteilhaft. Die Gefährdung gegen Einreißen ist weiter vermindert und der stramme Sitz begünstigt. Der Kraftfahrzeug-Sitz wird optimal umschlossen und damit geschützt.

Die Rücklage kann aus einem Copolymer, insbesondere aus Ethylen-Vinylacetat oder Butylen-Vinylacetat, bestehen. Auch andere Materialien können den Anforderungen genügen, z. B. auch ein thermoplastisches Elastomer oder ein besonders elastisches low-density Material, welches zumindest schichtweise oder in Abmischungen oder zu 100 % eingesetzt wird.

Die Rücklage kann aus einer Mehrschichtfolie bestehen, von der die eine Schicht einen hohen Ein- und Weiterreißwiderstand und die andere Schicht ein hohes Rückstellvermögen aufweist. Die Anordnung der beiden Schichten relativ zum Kraftfahrzeug-Sitz ist beliebig.

Die die Rücklage bildende Mehrschichtfolie kann eine dritte Schicht mit guten Verschweißeigenschaften aufweisen, die der Vorderlage zugekehrt eingesetzt wird.

Die die Vorderlage bildende Kunststofffolie kann auf der dem Kraftfahrzeug-Sitz zugekehrten Innenseite rutschgesichert und auf der Außenseite glatt ausgebildet sein. Damit besteht keine Gefahr, dass der Sitzbezug während der Montage des Kraftfahrzeuges relativ zum Kraftfahrzeug-Sitz verrutscht, auch wenn sich die Monteure bekanntermaßen bis etwa 35 Mal auf den so geschützten Kraftfahrzeug-Sitz setzen.

Das Verfahren zur Herstellung von Schutzbezügen zum Schutz von Kraftfahrzeug-Sitzen geht davon aus, dass aus Kunststofffolie in Form von Flachfolien die Vorderlage und die Rücklage bildende Bahnen gebildet und die beiden Bahnen für jeden Sitzbezug durch Querschweißung und durch mindestens eine Längsschweißung miteinander verbunden werden. Erfindungsgemäß wird in die die Rücklage bildende Bahn je Sitzbezug eine randgeschlossene Ausnehmung mit ovaler oder rechteckiger Gestalt mit abgerundeten Ecken in Form eines Anschnitts oder eines Ausschnitts eingebracht. Zumindest die Rücklage wird ganz oder teilweise aus elastischer, rückstellfähiger Kunststofffolie mit einer elastischen Dehnung von mindestens 50 % gebildet. Durch die Verwendung von Flachfolien ist es ohne weiteres möglich, verschiedene Materialien zu kombinieren und zusammenzuschweißen. So können die Vorderlage und die Rücklage aus je einer Flachfolie gebildet werden. Die beiden Bahnen werden über zwei Längsschweißungen miteinander verbunden. Es versteht sich, dass diese beiden durch die Längsschweißungen erzeugten Längsnähte sich in Förderrichtung der endlosen Bahnen der Flachfolien erstrecken. Durch diese besondere Formgestaltung werden die beiden freien Ecken des Sitzpolsters besonders wirksam und großflächig umhüllt und geschützt. Gleichzeitig weist der Sitzbezug die erforderliche Beweglichkeit für ein leichtes Überstülpen über den Kraftfahrzeug-Sitz auf. Durch diese besondere Ausbildung der Verbindungsstreifen bekommt die randgeschlossene Ausnehmung eine ovale oder rechteckartige Gestalt. Die randgeschlossene Ausnehmung kann durch einen Ausschnitt realisiert sein, also indem in der Bahn der Rücklage ein Abfallstück ausgeschnitten ist. Es ist aber auch möglich, die Ausnehmung nur durch einen etwa U-förmigen Anschnitt zu realisieren und eine diesbezügliche Klappe an der Rücklage zu belassen, die sich bei der Handhabung des Sitzbezugs nicht störend auswirkt. Die randgeschlossene Ausnehmung weist abgerundete Ecken auf, damit ein Einreißen der Kunststofffolie beim Überstülpen über den Kraftfahrzeugsitz vermieden wird.

Bei den aufgezeigten Herstellungsmöglichkeiten kann die die Vorderlage bildende Bahn und/oder die Rücklage bildende Bahn auch rutschgesichert ausgestattet werden. Dies gilt in besonderem Maß für die die Vorderlage bildende Bahn, damit der Sitzbezug in diesem Bereich nicht seitlich verrutschen kann, wenn er durch mehrfaches Niedersitzen und Wiederaufstehen durch einen Monteur oder eine andere Bedienungsperson entsprechend beansprucht wird. Die Haftung der Vorderlage auf dem Kraftfahrzeug-Sitz entlastet die Beanspruchung der Schweißungen.

Die Erfindung wird an bevorzugten Ausführungsbeispielen und Herstellungsweisen weiter erläutert und beschrieben. Es zeigen:
- **Fig. 1**: eine Draufsicht auf einen flachliegenden Sitzbezug, und zwar auf dessen Rücklage,
- **Fig. 2**: einen Schnitt gemäß der Linie II-II in Fig. 1,
- **Fig. 3**: eine Seitenansicht eines Kraftfahrzeug-Sitzes mit dem übergestülpten Sitzbezug gemäß den Fig. 1 und 2,
- **Fig. 4**: eine Draufsicht auf eine Endlosbahn aus zwei Flachfolien in Form eines Halbschlauchs zur Verdeutlichung mehrerer Herstellungsschritte,
- **Fig. 5**: eine zugehörige Seitenansicht,
- **Fig. 6**: eine Draufsicht auf eine Endlosbahn aus zwei Flachfolien zur Verdeutlichung mehrerer Herstellschritte und,
- **Fig. 7**: die zu Fig. 6 gehörende Seitenansicht.

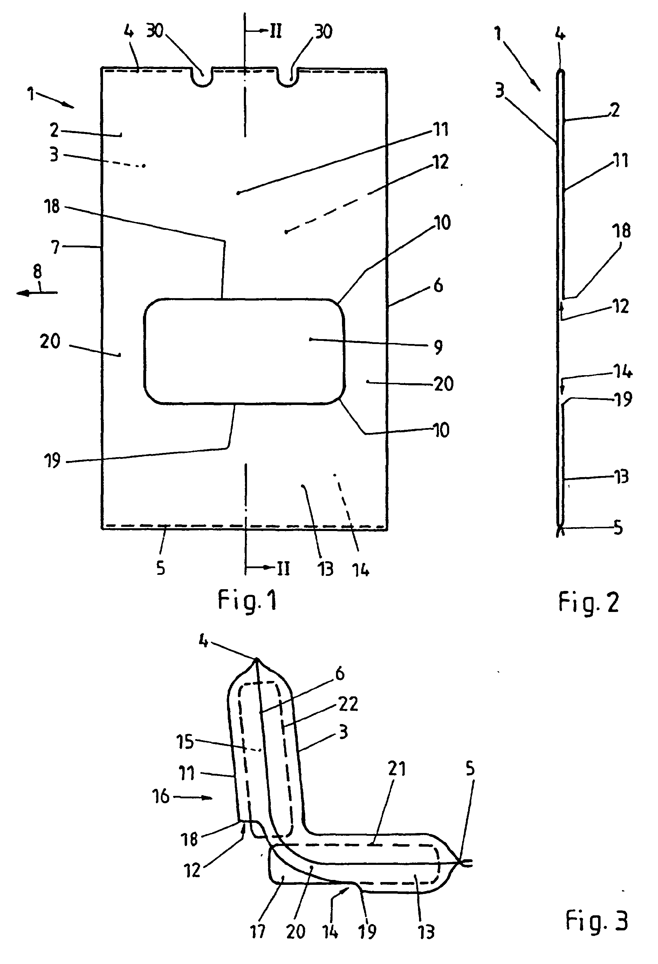

Der in Fig. 1 in flachliegendem Zustand dargestellte Sitzbezug 1 besteht aus doppellagiger Kunststoffolie. Die Draufsicht zeigt gleichsam die Ansicht von rückwärts, also die unmittelbare Draufsicht auf eine Rücklage 2. Unter der Rücklage 2 befindet sich als zweite Lage eine Vorderlage 3. Rücklage 2 und Vorderlage 3 bilden nach der Verschweißung ein zusammenhängendes Materialstück Kunststofffolie, wobei die Rücklage 2 mit der Vorderlage 3 über eine erste Längsschweißung 4 in Verbindung stehen. Auf der anderen Längsseite sind Rücklage 2 und Vorderlage 3 über eine zweite Längsschweißung 5 in Form einer durchgehenden Längsschweißnaht ebenfalls verbunden. Obwohl diese Längsschweißungen 4 und 5 durch gestrichelte Linien angedeutet ist, ist es zweckmäßig, diese Längsnähte durchgehend, also ohne Unterbrechungsstellen, anzubringen. Außer im Bereich der Längsschweißung 4 und der Längsschweißung 5 ist die Rücklage 2 mit der Vorderlage 3 jedoch auch noch über zwei Querschweißungen 6 und 7 verbunden. Die Querschweißungen 6 und 7 schließen an die Längsschweißung 4 an und erstrecken sich bis zur Längsschweißung 5, so dass letztendlich die Rücklage 2 und die Vorderlage 3 entlang ihres Umrisses durchgehend miteinander verbunden sind. Die Bezeichnung längs und quer ist mit Hinblick auf eine Förderrichtung gemäß Pfeil 8 gewählt, also eine Richtung, in der eine Endlosbahn bei der Herstellung einzelner Sitzbezüge verarbeitet wird. Die Längsschweißung 4 und die Längsschweißung 5 erstrecken sich somit parallel zu dem Pfeil 8, während die Querschweißungen 6 und 7 quer dazu verlaufen. Bei der Herstellung können Flachfolien für die Vorderlage 3 einerseits und für die Rücklage 2 andererseits eingesetzt werden. Es ist aber auch möglich, den gesamten Sitzbezug aus Schlauchmaterial mit den entsprechenden Rückstelleigenschaften zu erstellen.

in der Rücklage 2 ist eine randgeschlossene Ausnehmung 9 mit abgerundeten Ecken 10 vorgesehen. Diese Ausnehmung 9 weist in etwa rechteckförmigen Umriss auf und ist im inneren Feld der Rücklage 2, also mit Abstand zu der Längsschweißung 4, der Längsschweißung 5 und auch den Querschweißungen 6 und 7 angeordnet. Wie man erkennt, ist diese Ausnehmung 9, die durch einen Ausschnitt oder einen Anschnitt gebildet werden kann, nicht in der Mitte symmetrisch vorgesehen, sondern in Richtung auf die eine Längskante verschoben angeordnet. Die Vorderlage 3 besitzt keine solche Ausnehmung, sondern ist ganzflächig durchgehend vorgesehen.

Ein Bereich der Rücklage bildet mit dem darunterliegenden Bereich der Vorderlage 3 eine erste Tasche 12. Ein Bereich 13 der Rücklage 2 bildet mit einem entsprechenden Bereich der Vorderlage 3 eine zweite Tasche 14 unterhalb der Ausnehmung 9. Durch die exzentrische Anordnung der Ausnehmung 9 ist die obere Tasche 12 vergleichsweise tiefer oder länger als die untere Tasche 14 ausgebildet. Die obere Tasche 12 dient zur Aufnahme bzw. Umhüllung einer Rückenlehne 15 (Fig. 3) eines Kraftfahrzeug-Sitzes 16, während die untere Tasche 14 über das zugehörige Sitzpolster 17 des Kraftfahrzeug-Sitzes 16 gestülpt wird.

Durch die Ausnehmung 9 besitzt die Tasche 12 gleichsam einen freien Rand 18 und die Tasche 14 einen freien Rand 19, die sich im Wesentlichen parallel zu dem Pfeil 8 erstrecken. Die beiden Ränder 18 und 19 bzw. die Bereiche 11 und 13 der Rücklage 2 sind über Verbindungsstreifen 20 miteinander verbunden. Diese Verbindungsstreifen 20 sind Bestandteil der Rücklage 2. Wichtig ist, dass die Querschweißungen 6 und 7 durchgehend vorgesehen sind, so dass auch die Verbindungsstreifen 20 mit der Vorderlage 3 verbunden sind. Es sind die Verbindungsstreifen 20, die den Kraftfahrzeug-Sitz 16 im Übergangsbereich zwischen Sitzpolster 17 und Rückenlehne 15 besonders wirkungsvoll umgreifen bzw. hintergreifen und damit vor Verschmutzung schützen (Fig. 3). Die Vorderlage 3 erstreckt sich in der übergestülpten Stellung des Sitzbezugs 1 an dem Kraftfahrzeug-Sitz 16, über die Sitzfläche 21 des Sitzpolsters 17 und über die Lehnfläche 22 der Rückenlehne 15, die mit dem Rücken des Benutzers des Sitzes in Wirkverbindung tritt. Die Rücklage 2 hingegen hintergreift die Rückenlehne 15 und untergreift das Sitzpolster 17.

Anhand der Schnittdarstellung der Fig. 2 ist die doppellagige Ausbildung des Sitzbezugs 1 nochmals verdeutlicht, wobei der Übersichtlichkeit halber die Verbindungsstreifen 20 nicht dargestellt sind.

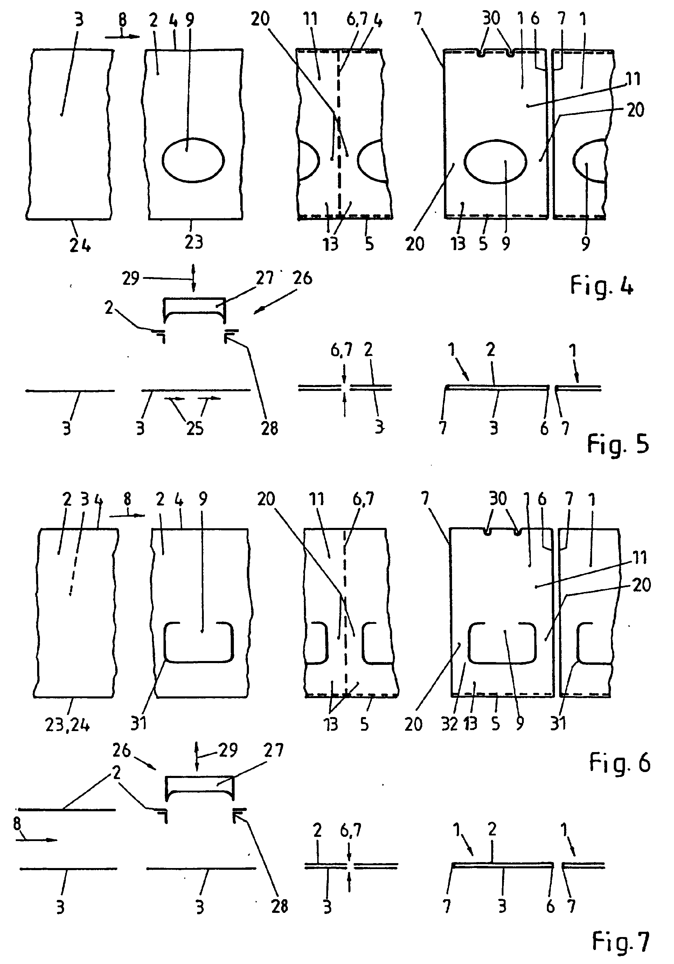

Die Fig. 4 und 5 zeigen in mehreren Schritten eine Herstellungsmöglichkeit für den Sitzbezug 1 gemäß den Fig. 1 bis 3. Es werden hier Flachfolien in Endlosbahn aus Kunststoffolie eingesetzt. In einem ersten Bearbeitungsschritt werden die beiden die Rücklage 2 und die Vorderlage 3 bildenden Bahnen voneinander entfernt geführt (siehe insbesondere Fig. 5) und schrittweise gemäß den Pfeilen 25 vorwärts in Richtung des Pfeils 4 bewegt. Dabei wird die die Rücklage 2 bildende Bahn durch ein Stanzwerkzeug 26 geführt, dessen patrizenförmiger Teil 27 oberhalb der die Rücklage 2 bildenden Bahn angeordnet ist, während der zugehörige matrizenförmige Teil 28 unterhalb der die Rücklage 2 bildenden Bahn, also zwischen der die Rücklage 2 bildenden Bahn und der die Vorderlage 3 bildenden Bahn ortsfest angeordnet ist. Der patrizenförmige Teil 27 wird gemäß Doppelpfeil 29 auf- und niedergehend angetrieben, wobei bei jedem Hub die eine Öffnung bildende Ausnehmung 9 in Form eines Abfallstücks ausgestanzt und abgeführt wird. Es ist auch möglich, die Ausnehmung 9 in Form eines Abfallstücks mit einem Messer maschinell auszuschneiden.

In einem weiteren Herstellungsschritt werden die die Rücklage 2 und die Vorderlage 3 bildenden Bahnen flach aufeinandergeführt und es erfolgen die Längsschweißungen 4 und 5 und die Querschweißungen 6 und 7, wobei diese Querschweißungen 6 und 7 durch zwei Pfeile in Fig. 5 verdeutlicht sind. Die Querschweißungen 6 und 7 verbinden einerseits die Rücklage 2 mit der Vorderlage 3 und trennen andererseits den vorangehenden Sitzbezug 1 von dem nachfolgenden Sitzbezug 1. Gleichzeitig mit dem Anbringen der Ausnehmung 9 können auch zwei Ausstanzungen 30 im Bereich der Längsschweißung 4 angebracht werden, die für die Montage einer Kopfstütze auf der Rückenlehne 15 bestimmt sind. Die Anbringung dieser Ausstanzungen 30 kann aber auch zusammen mit der Längsschweißung 5 oder den Querschweißungen 6 und 7 erfolgen. Vorteilhaft ist jedoch die dargestellte Relativlage, weil dann die Ausnehmung 9 im Bereich eines freien Längsrands 23 angeordnet wird. Der freie Längsrand 24 der Vorderlage 3 deckt sich mit dem freien Längsrand 23 der Rücklage 2.

Anhand der Fig. 6 und 7 ist eine weitere Herstellmöglichkeit für einen etwas abgewandelten Sitzbezug 1 dargestellt. Auch hier werden zwei getrennte Flachfolien eingesetzt, wobei die eine Flachfolie die Rücklage 2 und die andere Flachfolie die Vorderlage 3 bildet. Auch hier ist eine Längsschweißung 4 vorhanden, während am anderen Längsrand die Längsschweißung 5 vorgesehen ist. Auch hier ist eine Ausnehmung 9 in der Rücklage 2 vorgesehen. Es wird hier jedoch kein Ausschnitt in Form eines Abfallstücks ausgestanzt, sondern es wird lediglich ein U-förmig begrenzter Anschnitt 31 eingebracht, so dass gleichsam eine Klappe entsteht und ein Abfallstück vermieden wird. Eine solche Klappe bildet ebenfalls die Ausnehmung 9 und behindert das Aufstülpen des Sitzbezugs 1 auf den Kraftfahrzeug-Sitz 16 nicht.

### BEZUGSZEICHENLISTE

- 1: Sitzbezug
- 2: Rücklage
- 3: Vorderlage
- 4: Längsschweißung
- 5: Längsschweißung
- 6: Querschweißung
- 7: Querschweißung
- 8: Pfeil
- 9: Ausnehmung
- 10: Ecke

- 11: Bereich
- 12: Tasche
- 13: Bereich
- 14: Tasche
- 15: Rückenlehne
- 16: Kraftfahrzeug-Sitz
- 17: Sitzpolster
- 18: Rand
- 19: Rand
- 20: Verbindungsstreifen

- 21: Sitzfläche
- 22: Lehnfläche
- 23: Längsrand
- 24: Längsrand
- 25: Pfeil
- 26: Stanzwerkzeug
- 27: patrizenförmiger Teil
- 28: matrizenförmiger Teil
- 29: Doppelpfeil
- 30: Ausstanzung

- 31: Anschnitt

## Patentansprüche

1. Schutzbezug für Gegenstände aus doppellagiger Kunststofffolie, mit einer durchgehenden schützenden Vorderlage (3) und einer mit der Vorderlage durch Schweißung (6, 7) verbundenen Rücklage (2), die in Verbindung mit der Vorderlage eine Tasche (12) bildet, wobei die Rücklage (2) eine randgeschlossene Ausnehmung (9) aufweist, **dadurch gekennzeichnet, dass** zumindest die Rücklage (2) ganz oder teilweise aus elastischer, rückstellfähiger Kunststofffolie mit einer elastischen Dehnung von mindestens 50 % besteht.

2. Schutzbezug zum Schutz eines Kraftfahrzeug-Sitzes aus doppellagiger Kunststoffolie, insbesondere für die Erstausstattung, mit einer durchgehenden, die Sitzfläche und die Rücklehnenfläche des Sitzes schützenden Vorderlage (3) und einer mit der Vorderlage durch Querschweißung (6, 7) verbundenen Rücklage (2), die in Verbindung mit der Vorderlage eine erste, die Rückenlehne des Sitzes im wesentlichen aufnehmende Tasche (12) und eine das Sitzpolster im wesentlichen umschließende zweite Tasche (14) bildet, wobei die die beiden Taschen (12, 14) bildenden Bereiche (11, 13) der Rücklage (2) durch Verbindungsstreifen (20) verbunden sind, die sich über die freien Ränder (18, 19) der die Taschen (12, 14) bildenden Bereiche (11, 13) entlang der Querschweißungen (6, 7) erstrecken und mit der Vorderlage (3) verbunden sind, so dass die somit im wesentlichen durchgehende Rücklage (2) eine randgeschlossene Ausnehmung (9) aufweist, **dadurch gekennzeichnet, dass** zumindest die Rücklage (2) ganz oder teil-weise aus elastischer, rückstellfähiger Kunststofffolie mit einer elastischen Dehnung von mindestens 50 % besteht.

3. Schutzbezug nach Anspruch 2, **dadurch gekennzeichnet, dass** zumindest die Verbindungsstreifen (20) aus der elastischen, rückstellfähigen Kunststofffolie bestehen.

4. Schutzbezug nach Anspruch 2 oder 3, **dadurch gekennzeichnet, dass** die elastische, rückstellfähige Kunststofffolie eine solche Elastizität und ein solches Rückstellvermögen aufweist, dass der Schutzbezug von dem Kraftfahrzeug-Sitz mehrmalig auf- und abgezogen werden kann.

5. Schutzbezug nach einem der Ansprüche 1 bis 4, **dadurch gekennzeichnet, dass** die die Rücklage (2) bildende Kunststofffolie eine elastische Dehnung von mindestens 60 % aufweist.

6. Schutzbezug nach einem der Ansprüche 1 bis 4, **dadurch gekennzeichnet, dass** die die Rücklage (2) bildende Kunststofffolie eine elastische Dehnung von mindestens 60 % aufweist

7. Schutzbezug nach Anspruch 1 oder 2, **dadurch gekennzeichnet, dass** die Rücklage (2) aus einem Copolymer, insbesondere aus Ethylen-Vinylacetat oder Butylen-Vinylacetat, besteht.

8. Schutzbezug nach einem der Ansprüche 1 bis 7, **dadurch gekennzeichnet, dass** die Rücklage (2) aus einer Mehrschichtfolie besteht, von denen die eine Schicht einen hohen Ein- und Weiterreißwiderstand und die andere Schicht ein hohes Rückstellvermögen aufweist.

9. Schutzbezug nach Anspruch 8, **dadurch gekennzeichnet, dass** die die Rücklage (2) bildende Mehrschichtfolie eine dritte Schicht.

10. Schutzbezug nach einem der Ansprüche 1 bis 9, **dadurch gekennzeichnet, dass** die die Vorderlage (3) bildende Kunststofffolie auf der dem Kraftfahrzeug-Sitz zugekehrten Innenseite rutschgesichert und auf der Außenseite glatt ausgebildet ist.

11. Verfahren zur Herstellung von Schutzbezügen nach einem oder mehreren der Ansprüche 1 bis 10, wobei aus Kunststofffolie in Form von Flachfolien die Vorderlage und die Rücklage bildende Bahnen gebildet und die beiden Bahnen für jeden Bezug durch Querschweißung und durch mindestens eine Längsschweißung (5) miteinander verbunden werden, **dadurch gekennzeichnet, dass** in die die Rücklage (2) bildende Bahn je Bezug (1) eine randgeschlossene Ausnehmung (9) mit ovaler oder rechteckiger Gestalt mit abgerundeten Ecken (10) in Form eines Anschnitts oder eines Ausschnitts eingebracht wird und dass zumindest die Rücklage ganz oder teilweise aus elastischer, rückstellfähiger Kunststofffolie mit einer elastischen Dehnung von mindestens 50 % gebildet wird.

12. Verfahren nach Anspruch 11, **dadurch gekennzeichnet, dass** die Vorderlage (3) und die Rücklage (2) aus je einer Flachfolie gebildet werden, und dass die beiden Bahnen über zwei Längsschweißungen (4, 5) miteinander verbunden werden.

## Claims

1. A protective cover for objects, the cover being made of a double layered plastic foil, comprising a continuously extending protecting front layer (3) and a rear layer (2) being connected to the front layer (3) by welding (6, 7) and including a recess (9) with closed edges, a pocket (12) being formed by the rear layer (2) and the front layer (3), **characterized in that** at least a part of the rear layer (2) is made of an elastic and retractable material having an elastic stretch of at least 50 percent.

2. A seat cover to be mounted on a motor vehicle seat to protect the seat, the seat cover being made of a double layered plastic foil, especially for initial equipment, comprising a continuously extending front layer (3) being designed and arranged to protect the surface of a seating and of a backrest of a motor vehicle seat and a rear layer (2) being connected to the front layer (3) by transverse welding (6, 7) and including a recess (9) with closed edges, a first pocket (12) being formed by the rear layer (2) and the front layer (3) and being designed and arranged to receive the backrest of the seat and a second pocket (14) being formed by the rear layer and the front layer and being designed and arranged to receive at least a portion of the seating of the seat, portions (11, 13) of the rear layer (2) forming the two pockets (12, 14) being connected to each other by connecting strips (20), the connecting strips extending over the free rims (18, 19) of the portions (11, 13) forming the pockets (12, 14) along the welding (6, 7) and being connected to the front layer (3), **characterized in that** at least a part of the rear layer (2) is made of an elastic and retractable material having an elastic stretch of at least 50 percent.

3. The seat cover of claim 2, **characterized in that** at least the connecting strips (20) are made of the elastic and retractable material.

4. The seat cover of claim 2 or 3, **characterized in that** the elastic and retractable material has an elasticity and a retractability such that the protective cover is mountable and demountable on a motor vehicle seat a plurality of times.

5. The seat cover of one of the claims 1 to 4, **characterized in that** the plastic foil forming the rear layer has an elastic stretch of at least 60 percent.

6. The seat cover of one of the claims 1 to 4, **characterized in that** the plastic foil forming the rear layer has an elastic stretch of at least 60 percent.

7. The seat cover of claim 1 or 2, **characterized in that** the rear layer (2) is made of a co-polymer, especially of ethylene vinylacetate or of butene vinylacetate.

8. The seat cover of one of the claims 1 to 7, **characterized in that** the rear layer (2) is made of a multi layer foil, a first layer of which having high resistance to initial tearing and continued tearing, and a second layer of which having high retractability.

9. The seat cover of claim 8, **characterized in that** the multilayer foil forming the rear layer (2) includes a third layer.

10. The seat cover of one of the claims 1 to 9, **characterized in that** the plastic foil forming the front layer (3) is designed to be slip-proof at its inner side to face the seat, and to be smooth at its outer side.

11. A method of producing seat covers according the features of one or more of the claims 1 to 10, the method comprising the steps of forming two lines of flat plastic foils defining the front layer and the rear layer, connecting the two lines by at least one transverse welding and by at least one longitudinal welding (5) to form a seat cover, **characterized in that** a recess (9) of oval or rectangular shape formed by a continuous closed punching line and having rounded corners (10) is punched into the second line defining the rear layer (2) of each cover (1), and at least a portion of the rear layer (2) is made of an elastic and retractable material having an elastic stretch of at least 50 percent.

12. The method of claim 11, **characterized in that** the front layer (3) and the rear layer (2) are formed of two lines of flat plastic foils and the two lines are connected by two longitudinal weldings (4, 5).

## Revendications

1. Housse de protection d'objets, formée par un film plastique avec deux parties, comportant une partie avant (3), formant une protection continue, et une partie arrière (2), qui est reliée à la partie avant par soudage (6, 7) et qui, en liaison avec la partie avant, forme une poche (12), la partie arrière (2) comportant un évidement (9) fermé sur les bords, **caractérisée en ce qu'**au moins la partie arrière (2) est réalisée totalement ou partiellement dans un film plastique élastique, apte à se relaxer élastiquement, ayant un allongement élastique de 50 % au moins.

2. Housse de protection pour la protection d'un siège de véhicule automobile, formée par un film plastique avec deux parties, en particulier lors du premier équipement, comportant une partie avant (3), protégeant en continu la surface d'assise et la surface du dossier du siège, et une partie arrière (2), qui est reliée à la partie avant par une soudure transversale (6, 7) et qui, en liaison avec la partie avant, forme une première poche (12), recevant pour l'essentiel le dossier du siège, et une deuxième poche (14) entourant sensiblement l'assise, les zones (11, 13) formant les deux poches (12, 14) de la partie arrière (2) étant reliées entre elles par des bandes de liaison (20), qui s'étendent le long des soudures transversales (6, 7) sur les bords libres (18, 19) des zones (11, 13) formant les poches (12, 14) et sont reliées à la partie avant (3) de telle sorte que la partie arrière (2) sensiblement continue comporte ainsi un évidement (9) fermé sur les bords, **caractérisée en ce qu'**au moins la partie arrière (2) est réalisée totalement ou partiellement dans un film plastique élastique, apte à se relaxer élastiquement, ayant un allongement élastique de 50 % au moins.

3. Housse de protection selon la revendication 2, **caractérisée en ce qu'**au moins les bandes de liaison (20) sont réalisées dans un film plastique élastique, apte à se relaxer élastiquement.

4. Housse de protection selon la revendication 2 ou 3, **caractérisée en ce que** le film plastique élastique, apte à se relaxer élastiquement, présente une élasticité et une capacité de relaxation élastique telles que la housse de protection peut être enfilée et retirée plusieurs fois du siège automobile.

5. Housse de protection selon l'une quelconque des revendications 1 à 4, **caractérisée en ce que** le film plastique formant la partie arrière (2) présente un allongement élastique de 60 % au moins.

6. Housse de protection selon l'une quelconque des revendications 1 à 4, **caractérisée en ce que** le film plastique formant la partie arrière (2) présente un allongement élastique de 60 % au moins.

7. Housse de protection selon la revendication 1 ou 2, **caractérisée en ce que** la partie arrière (2) est réalisée dans un copolymère, en particulier en éthylène vinylacétate ou butylène vinylacétate.

8. Housse de protection selon l'une quelconque des revendications 1 à 7, **caractérisée en ce que** la partie arrière (2) est réalisée dans un film multicouche, dont une couche présente une bonne résistance à l'amorce de déchirure et à la déchirure et l'autre couche présente un pouvoir de relaxation élastique élevé.

9. Housse de protection selon la revendication 8, **caractérisée en ce que** le film multicouche formant la partie arrière (2) comporte une troisième couche.

10. Housse de protection selon l'une quelconque des revendications 1 à 9, **caractérisée en ce que** le film plastique formant la partie avant (3) comporte une face intérieure anti-glissement, orientée vers le siège automobile, et une face extérieure lisse.

11. Procédé de réalisation de housses de protection selon une ou plusieurs des revendications 1 à 10, dans lequel des bandes, constituant la partie avant et la partie arrière, sont formées dans un film plastique sous forme de film plat et les deux bandes pour chaque housse de protection sont assemblées l'une à l'autre par une soudure transversale et par au moins une soudure longitudinale (5), **caractérisé en ce que** dans chaque bande formant la partie arrière (2) de chaque housse de protection (1) est réalisé, sous la forme d'une découpe ou d'une perforation, un évidement (9) fermé sur les bords, ayant une forme ovale ou rectangulaire avec des angles (10) arrondis, et **en ce qu'**au moins la partie arrière (2) est réalisée totalement ou partiellement dans un film plastique élastique et apte à se relaxer élastiquement, ayant un allongement élastique de 50 % au moins.

12. Procédé selon la revendication 11, **caractérisé en ce que** la partie avant (3) et la partie arrière (2) sont réalisées chacune dans un film plat et **en ce que** les deux bandes sont assemblées l'une à l'autre par l'intermédiaire de deux soudures longitudinales (4, 5).
